(19) **Europäisches Patentamt / European Patent Office / Office européen des brevets**

(11) **EP 3 401 087 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(51) Int Cl.:
**B29C 70/58** (2006.01) **B29C 51/08** (2006.01)

(21) Anmeldenummer: **18164838.7**

(22) Anmeldetag: **29.03.2018**

(54) **HERSTELLUNG EINER ACRYLWANNE MIT RUTSCHHEMMENDER OBERFLÄCHE**

PRODUCTION OF AN ACRYLIC TUB WITH ANTI-SLIP SURFACE

FABRICATION D'UNE BAIGNOIRE ACRYLIQUE À SURFACE ANTIDÉRAPANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2017 DE 102017109848**

(43) Veröffentlichungstag der Anmeldung:
**14.11.2018 Patentblatt 2018/46**

(73) Patentinhaber: **Mauersberger, Falko**
**09123 Chemnitz (DE)**

(72) Erfinder: **Mauersberger, Falko**
**09123 Chemnitz (DE)**

(74) Vertreter: **Pöhner, Wilfried Anton et al**
**Pöhner Scharfenberger & Partner**
**Patent- und Rechtsanwälte mbB**
**Kaiserstrasse 33**
**Postfach 6323**
**97013 Würzburg (DE)**

(56) Entgegenhaltungen:
**WO-A1-01/57117        DE-A1- 4 309 019**
**DE-A1- 10 004 981        US-A- 3 985 703**

**Beschreibung**

Vorliegende Erfindung betrifft ein Verfahren zur Herstellung einer Dusch- oder Badewanne aus Sanitäracryl mit rutschhemmender Oberfläche gemäß des Oberbegriffs des Anspruchs 1.

Bei Bade- oder Duschwannen im privaten wie öffentlichen Bereich werden immer häufiger als ausschließliche oder zusätzliche Sicherungen gegen Stürze, durch die besonders Kinder und ältere Menschen gefährdet sind, Rutschhemmungen eingesetzt. Die Rutschhemmung kann hierbei durch auflegen von Gummistoppern nachträglich hinzugefügt werden. Beliebter, weil hygienischer, haltbarer und ästhetischer sind jedoch Wannen, die mit einer rutschhemmenden Oberfläche versehen sind.

Diese der Oberfläche innewohnende rutschhemmende Eigenschaft wird durch Vorsehen einer gewissen Rauigkeit erreicht, d.h. die Oberfläche weißt auf einer mehr oder minder feinen Skala "Berge" u. "Täler" auf. Die charakteristische Längenskala und die Form dieser Strukturen hat nun entscheidenden Einfluss auf die Qualität der Rutschhemmung, das Erscheinungsbild der Oberfläche und die Reinigbarkeit, d.h. wie gut oder schlecht die Oberfläche von nach einiger Benutzung unvermeidlich darauf haftendem Schmutz befreit werden kann.

Nahezu alle Badewannen und Duschwannen werden heutzutage aus Materialien dreier Klassen gefertigt. Dies sind emaillierter Stahl, Mineralguss und Acrylglas, genauer Polymethylmethacrylat (PMMA). Besonders letztere werden aufgrund des geringen Gewichts, der freien Form- und Färbbarkeit, der Stoß- und Schlagempfindlichkeit, der geringeren Wärmeleitfähigkeit und entsprechend wärmerem Hautgefühl immer beliebter.

Die Eigenschaften hinsichtlich Erweichungspunkt, Dicke, Schwermetallgehalt, Farbechtheit sowie thermische und chemische Beständigkeit die Acrylglas für den Einsatz im häuslichen Sanitärbereich aufweisen muss, werden in der Norm DIN EN 263 festgelegt. Acrylglas, welches dieser Norm genügt wird als Sanitäracryl bezeichnet.

Ein recht neuer Werkstoff, der in seinen Eigenschaften und Inhaltsstoffen Mineralguss ähnelt ist Mineralisches Acryl, etwa das Produkt HI-MACS des Herstellers LG. Es verbindet die Form- und Färbbarkeit von Acryl mit der Härte und Beständigkeit traditioneller Keramik bzw. emaillierter Stahlwannen. Ähnlich wie bei Mineralguss wird ein hoher Anteil an mineralischen Partikeln in einer Matrix weicheren Materials eingeschlossen. Im Gegensatz zu Mineralguss wird jedoch nicht Epoxidharz sondern Acrylglas als Matrix eingesetzt. Dies hat den Vorteil, dass die gewünschte Form nicht gegossen werden muss, sondern eine nachträgliche Formgebung, etwa durch Tiefziehverformung möglich ist. Die Herstellung sowohl der als Rohling dienenden Mineralacrylplatten als auch die Verformung ist allerdings aufwendiger als bei Sanitäracryl, weswegen aus diesem Werkstoff gefertigte Wannen deutlich, d.h. um einen Faktor 2 bis 3, teurer sind als einfache Sanitäracrylwannen.

Die Offenlegungsschrift DE 43 09 019 A1 stellt eine Bade- oder Duschwanne vor, etwa aus Acrylglas, Polymerbeton oder emailliertem Stahl, bei der ein mit einer Glanzoberfläche versehener Boden mit Rutschhemmflächen versehen ist, die durch Aufrauen, etwa durch Strahlen, Ätzen Bürsten oder Schleifen, hergestellt werden.

Bei Mineralacryl kann eine gute Rutschhemmung dadurch erreicht werden, dass die Oberfläche mit einer leichten Rauigkeit versehen wird, etwa durch Anschleifen. Dieses Vorgehen ließ sich jedoch bisher nicht auf bisher bekannte Sanitäracrylwannen übertragen. Aufrauen der Oberfläche bewirkt zwar auch hier Ausbildung einer gewissen rutschhemmenden Wirkung, welche mit höherer Rauigkeit größer wird. Dies geht jedoch auf Kosten der leichten Reinigbarkeit und auch des Aussehens. Die Erfahrung hat gezeigt, dass bei herkömmlichem Acryl sich durch Aufrauen der Oberfläche beide Eigenschaften nicht zufriedenstellend miteinander verbinden lassen. Des Weiteren verschlechtert sich eine durch Aufrauen geschaffene rutschhemmende Wirkung schon nach nur kurzer Benutzungszeit deutlich.

Bei im Stand der Technik bekannten Dusch- oder Badewannen wird die Rutschhemmung dadurch realisiert, dass nach dem Formen der Wanne ein Granulat auf die Oberfläche aufgebracht und fest verbunden wird. Dadurch ist zwar eine gute bis sehr gute Rutschhemmung erreichbar, aber nur, wenn ein Granulat mit eine recht hohen Korngröße verwendet wird, wodurch die Reinigung der so behandelten Acryloberfläche ist nur noch eingeschränkt möglich ist, d.h. es bilden sich in den recht tiefen Rillen und Tälern kaum zu entfernende Schmutzablagerungen, welche unästhetisch und, noch wichtiger, unhygienisch sind. Sollte sich die Granulatbeschichtung sich im Laufe der Zeit abnutzen, eventuell auch aufgrund von verstärken Reinigungsbemühungen welche durch ihre erhöhte Verschmutzungsneigung ausgelöst werden, ist es zudem nicht ohne weiteres möglich sie wieder zu regenerieren.

Vorliegende Erfindung hat sich daher zur Aufgabe gemacht, die beschriebenen Probleme zu überwinden und auch für Duschwannen aus Sanitäracryl bei guter Reinigbarkeit bei ansprechender Optik eine gute Rutschhemmung zu erreichen, welche bei Benutzung lange Zeit erhalten bleibt und zudem bei Abnutzung mit einfachen Mitteln wiederherstellbar ist.

Als Lösung präsentiert vorliegende Erfindung ein Herstellungsverfahren einer Dusch- oder Badewanne mit rutschhemmender Oberfläche gemäß Anspruch 1, eine Dusch- oder Badewanne mit rutschhemmender Oberfläche gemäß Anspruch 8 sowie ein Verfahren zur Regeneration der rutschhemmenden Eigenschaften einer Dusch- oder Badewanne mit rutschhemmender Oberfläche gemäß Anspruch 9.

Die erfindungsgemäße Herstellung einer Dusch- oder Badewanne sieht zunächst vor, in grundsätzlich bekannter Weise einen bereitgestellten Acrylplattenrohling durch ein Tiefziehverfahren mit Erwärmen, Tiefziehen und Erkalten lassen zu eine (Dusch- oder Bade-) Wanne gewünschter Form zu schaffen. Als ein vorliegende Erfindung kennzeichnender Punkt unterscheidet sich der verwendete Rohling allerdings zu herkömmlichem Sanitäracryl darin, dass er einen feinkörnigen Zuschlagsstoff enthält. Nach dem Formen und eventuell nach Durchführen weiterer Schritte wie rückseitigem Anbringen einer Verstärkungsschicht aus Glasfasermatten und Epoxidharz, Zuschneiden u. ggf. Glätten der Wannenränder und Einbringen von Bohrungen, schlägt vorliegende Erfindung als zweite wesentliche Neuerung vor, in einem weiteren Schritt die Oberfläche der Wanne aufzurauen und dabei mit einer Rauigkeit zu versehen, die einen bestmöglichen Kompromiss zwischen Einfachheit der Reinigung auf der einen und Rutschhemmung auf der anderen Seite bewirkt.

Obwohl auch andere Techniken zum Ziel führen mögen, geschieht dieses Aufrauen im Rahmen vorliegender Erfindung durch Schleifen der Oberfläche mit einem Schwing- oder Exzenterschleifer unter Verwendung eines Schleifmittels mit einer bestimmten Körnung. Zum Erreichen eines optimalen Ergebnisses im Hinblick auf Schleifbild und damit einhergehende optische sowie rutschhemmende Eigenschaften, ist ein recht schmaler Wertebereich der Körnung einzuhalten, welcher zwischen etwa 300 und 350 Mesh liegt. Die besten Ergebnisse wurden mit einer Körnung von 320 Mesh erreicht. Ein Mesh ist die übliche Maßeinheit für Körnungen und bezeichnet die Zahl der Öffnungen pro Zoll eines Siebes, welches benötigt, um die auf einem Sandpapier verwendete Korngrößenverteilung zu erhalten. Schleifmitteln, die kein Sandpapier sind, kann über ein Vergleich der Rauigkeiten eine Mesh-Maßzahl zugeordnet werden.

Hierbei ist zu beachten, dass für höhere Mesh-Kennzahlen die charakteristische Größe der Sieböffnungen, welche durch die einfache Formel

$$\text{Öffnungsgröße} = 1 \text{ Zoll} / \text{Mesh-Zahl}$$

angenähert werden kann, immer mehr von der charakteristischen Korngröße nach dem Sieben abweicht. Bei einer Mesh-Zahl von 300 ergibt sich beispielsweise nach obiger Formel eine Sieböffnungsgröße von ca. 75 Mikrometern. Die charakteristische Korngröße der Siebprodukte ist jedoch um ca. einen Faktor 2 kleiner, wobei die Details von weiteren Parametern, wie dem Durchmesser der Siebdrähte und damit dem durch sie verursachten Abdeckungsgrad bestimmt ist und somit vom konkreten Siebmodell abhängt.

Neben der Körnung des Schleifmittels ist auch der Hub des Schleifgerätes, beispielsweise Schwingschleifers oder Exzenterschleifers, von großer Bedeutung. Gemäß vorliegender Erfindung ist ein Hub zwischen 1 bis 4 mm einzustellen. Für beste Ergebnisse hat sich ein Bereich von 2 bis 3 mm als sinnvoll gezeigt, wobei mit dem größeren Wert begonnen und dann in einem zweiten Durchgang mit dem kleineren Wert der Oberfläche ein feines Finish gegeben werden sollte.

Durch das erfindungsgemäße Aufrauen, insbesondere Schleifen, der Wannenoberfläche entstehen dort Strukturen, die einer Rutschhemmung förderlich sind. Insbesondere wird eine Landschaft aus idealerweise recht schroffen Bergen und Tälern geschaffen, die sowohl eine gewisse charakteristische Höhe als auch einen charakteristischen Durchmesser haben. Im Übrigen ist es für die rutschhemmende Wirkung unter Nässe von Vorteil, wenn diese Strukturen nicht zu klein ausfallen und möglichst schroff und, auf mikroskopischer ebene, scharfkantig sind. Abgerundete, wellige Strukturen führen hingegen zu einer Verschlechterung der Rutschhemmung. Als guter Wertebereich für die charakteristische Größe der Oberflächenrauigkeit wurde 3 bis 10 $\mu$m identifiziert. Die besten Ergebnisse hinsichtlich des gesuchten optimalen Kompromisses zwischen den widerstreitenden Anforderungen Rutschfestigkeit und Reinigbarkeit werden zwischen 4 und 6 $\mu$m erzielt.

Wesentlich dafür, dass eine solche Oberflächenstruktur entsteht und auch unter Benutzung zumindest einige Zeit seine rutschhemmende Wirkung nahezu konstant beibehält ist die Verwendung eines Acrylplatten-Rohlings, welcher einen gewissen Anteil eines feinkörnigen Zuschlagsstoffes enthält. Dieser ist idealerweise mineralischen Ursprungs, so dass seine Partikel gegenüber der Polymermatrix, in die sie eingebettet sind, eine höhere Härte besitzen. Dadurch können beim Aufrauen vergleichsweise schroffe Oberflächenstrukturen, also die Berge und Täler, entstehen. Die Härte der Zuschlagsstoffpartikel verhindert auch, dass diese Strukturen bei bestimmungsgemäßer Benutzung vorschnell ‚abgeschliffen‘ bzw. eingeebnet werden.

Als sehr gute Wahl hat sich Kreide, bzw. Kreidepulver erwiesen. Es ist zu vermuten, dass der Aufbau von Kreide aus Mikrofossilien, genauer den Calcit-Hüllen abgestorbener mariner Mikrolebewesen (Coccolithen oder Calcisphären) bzw. deren Bruchstücken, für eine vergleichsweise homogene Korngrößenverteilung mit einem kleinen mittleren Durchmesser in der Größenordnung der Mikrofossilien oder größerer Bruchstücke von diesen sorgt, welche zwischen 1 - 5 $\mu$m liegt. Aus der sie umgebenden Acrylmatrix herausragende Partikel sorgen nach dem erfindungsgemäßen Aufrauen für eine Rauigkeit die etwas über der Größenskala der mittleren Partikelgröße, bei circa 4 - 6 $\mu$m liegt.

Andere Zuschlagstoffe sind jedoch ebenfalls möglich. Zu nennen wären hier Calciumcarbonat aus anderen Quellen als Kreide, beispielsweise zermahlene Calcit-Kristalle, Magnesiumcarbonat, Siliziumdioxid, insbesondere in der Form pyrogener Kieselsäure, oder auch Titandioxid.

Besonders letzteres ist ebenfalls hervorragend als erfindungsgemäßer Zuschlagstoff geeignet. Zu Korngrößen unterhalb 1 $\mu$m zermahlen, kann es schon in kleinen Anteilen die Oberflächeneigenschaften des im erfindungsgemäßen Verfahren verarbeiteten Sanitäracrylrohlings positiv verändern. Es ist bereits bekannt Titandioxid weißem Sanitäracryl als Pigment zugegeben, wobei hierbei sein Gewichtsanteil üblicherweise recht genau 2% beträgt. Vorliegende Erfindung hat nun die überraschende Entdeckung gemacht, dass nur eine vergleichsweise geringe Erhöhung des Titandioxid-Gehaltes über die übliche Menge hinaus einen überproportionalen Einfluss auf die Oberflächeneigenschaften und genaue die rutschhemmenden Eigenschaften einer aufgerauten Oberfläche zur Folge hat. Dies ist vermutlich dadurch zu erklären, dass die Zugabe von Titandioxid die Oberflächenfestigkeit erhöht, wodurch durch das Aufrauen schroffere Oberflächenstrukturen entstehen können, welche auch bei Benutzung nicht so schnell Abnutzen, wie das ohne das zusätzliche Titandioxid der Fall wäre.

Die erfindungsgemäße Bade- bzw. Duschwanne zeichnet sich also dadurch aus, dass sie aus einem Sanitäracryl hergestellt ist, welcher einen feinkörnigen, bevorzugt harten, mineralischen, Zuschlagstoff enthält. Der Gewichtsanteil, sollte, um spürbare Verbesserungen der Oberflächeneigenschaften zu bewirken, nicht zu gering sein, jedoch aus Gründen der Materialfestigkeit auch nicht zu hoch liegen. Der genaue optimale Gewichtsanteil hängt vom konkret verwendeten Zuschlagstoff ab, es ist aber der Verdienst vorliegender Erfindung, erkannt zu haben, dass bereits recht geringe absolute Anteile des Zuschlagstoffes von deutlich unter einem Gewichtsprozent ausreichend sind, um eine sehr vorteilhafte Verbesserung der durch Aufrauen erreichbaren Rutschhemmung zu bewirken. Besonders gute Ergebnisse werden bei einem Gewichtsanteil von etwa 0,1 bis 0,5 % Kreidepulver und/oder 0,02 bis 0,1 % Titandioxid erzielt. Diese Angaben sind additiv zu den schon üblicherweise in Sanitäracryl vorkommenden Anteilen zu verstehen.

Weiterhin ist die Oberfläche der Wanne aus diesem einen Zuschlagstoff enthaltenden Sanitäracryl erfindungsgemäß mit einer gewissen Rauigkeit versehen, die eine charakteristische Länge von etwa 3 bis 10 $\mu$m, bevorzugt 4 bis 6 $\mu$m hat.

Aufgrund der hohen Festigkeit der mineralischen Partikel können die durch das Aufrauen schroffere und scharfkantigere Oberflächenstrukturen ausbilden und auch unter Benutzung länger Bestand haben, als dies bei Sanitäracryl ohne oder mit zu geringen Mengen des Zuschlagstoffes der Fall ist.

Bei einer solchen Bade- oder Duschwanne aus einem Sanitäracryl, welches einen feinkörnigen Zuschlagstoff enthält, ist es sehr leicht möglich, die Oberfläche zu regenerieren, d.h. die Rutschhemmenden Eigenschaften zu reaktivieren, wenn diese nach einiger Zeit der Benutzung nachgelassen haben mögen. Dies kann einfach dadurch geschehen, dass mit einem Schleifmittel geeigneter Körnung die Oberfläche der Wanne erneut geschliffen und so eine oben beschriebene optimale Rauigkeit wiederhergestellt wird. Da in diesem Fall eine gewisse Grundrauigkeit nach wie vor vorhanden ist, ist hier kein maschinelles Schleifen notwendig. Im Gegensatz zum ersten Schleifvorgang, welcher von einer absolut glatten und im Idealfall makellos glänzenden Oberfläche ausgeht, ist dies durch Einsatz eines manuellen Schleifmittels, beispielsweise eines simplen Schleifschwammes möglich. Somit können die Benutzer der Wanne diese einfache Arbeit selbst durchführen, was ihnen die Kosten einer Überholung durch einen Fachmann oder gar eines Neukaufes erspart.

Mit dem erfindungsgemäßen Verfahren unter Verwendung eines Sanitäracryls mit nur 0,03% additivem Gewichtsanteil von Titandioxid als Zuschlagstoff konnte durch Schleifen der Oberfläche mit einem Schwingschleifer mit einem Hub zwischen 2 und 3 mm und mit einem Schleifmittel mit Körnung 320 die TÜV-zertifizierte Rutschhemmungs-Bewertungsgruppe ‚R 10' in der Kategorie "Fußböden in Arbeitsräumen und Arbeitsbereichen mit Rutschgefahr" und Bewertungsgruppe ‚C' in der Kategorie "Nassbelastete Barfußbereiche" erreicht werden. Zum Vergleich sind die besten Ergebnisse, die mit einem herkömmlichen Sanitäracryl ohne zusätzliches Titandioxid als Zuschlagsstoff erreicht werden konnten, nur die Bewertungsgruppen ‚R 8' bzw. ‚A'.

Die sich durch vorliegende Erfindung ergebenden Vorteile liegen auf der Hand. Zum einen wird ein optimaler Kompromiss zwischen Rutschhemmung und Reinigbarkeit erreicht, der mit herkömmlichen Methoden unerreichbar war. Hierbei ist hervorzuheben, dass die Rutschhemmung der erfindungsgemäßen Bade- oder Duschwanne besonders im nassen Zustand zu spüren ist, also dann wenn sie auch benötigt wird. Im trockenen Zustand fühlt sich die Oberfläche trotz Aufrauhung weiterhin sehr glatt und haptisch angenehm an. Dies steht ganz im Gegensatz zu herkömmlichen, durch Beschichtung rutschhemmend gestalteten Sanitäracrylwannen, deren Rauigkeit auch im trockenen Zustand deutlich zu spüren ist und als unangenehm empfunden werden kann.

Die vorgeschlagenen Zuschlagstoffe sind sämtlich günstig in Mengen erhältlich und gesundheitlich unbedenklich, insbesondere da sie nach dem Oberflächenbehandlungsschritt des Aufrauens fest in der Acrylmatrix eingebunden bleiben. Erfolg das Aufrauen mittels Schleifen, so ist dies ein simpler und sehr schnell durchführbarer Verfahrensschritt. Insgesamt sind also die Herstellungskosten einer erfindungsgemäßen Bade- oder Duschwanne gegenüber einer herkömmlichen nur unwesentlich höher, bieten aber eine viel bessere Kombination aus Rutschhemmung und Einfachheit der Reinigung.

Einen in der Praxis nicht unwesentlichen Vorteil stellt auch die Tatsache dar, dass die erfindungsgemäße Bade- oder Duschwanne bzw. die durch das erfindungsgemäße Verfahren hergestellte Wanne in optisch-ästhetischer Hinsicht wesentlich hochwertiger und ansprechender aussieht als eine herkömmliche bzw. auf herkömmliche Art hergestellte Wanne ohne Rutschhemmung oder mit Rutschhemmung auf Granulat-Basis. Ihre wertige Matt-Optik liegt dahingehend ästhetisch auf dem Niveau der wesentlich teureren mineralischen Acrylwannen.

Vorteilhafte Weiterbildung vorliegender Erfindung, welche Einzeln oder in Kombination realisierbar sind, sofern sie sich nicht offensichtlich gegenseitig ausschließen, sollen im Folgenden vorgestellt werden.

Der Gewichtsanteil des Zuschlagstoffes liegt vorteilhafterweise zwischen 0,01 und 0,5%, bevorzugt zwischen 0,02 - 0,2%. Hierdurch kann die gewünschte oberflächenstabilisierende Wirkung erreicht werden, ohne dass die Polymermatrix des Sanitäracryls zu sehr ausgedünnt und damit in ihrer Festigkeit beeinträchtigt wird.

Verschiedene Stoffe bieten sich als feinkörnige Zuschlagstoffe für den im erfindungsgemäßen Verfahren verwendeten Acrylrohling an. Dies ist kann insbesondere Magnesiumkarbonat, pyrogene Kieselsäure, Titandioxid oder Calciumcarbonat sein. Auch ein Gemisch aus mehreren dieser Stoffe kommt als Zuschlagstoff in Frage.

In letzterem Fall werden die erfindungsgemäßen Vorteile einer rutschhemmenden Oberfläche bei schon vergleichsweise geringer Oberflächenrauhigkeit und damit einhergehender guter Reinigbarkeit besonders gut erreicht, wenn das feinkörnige Calciumcarbonat in der Form von Kreidepulver, d.h. zermahlener Kreide, vorliegt. Kreide ist bekanntlich ein weiches, weißes Sedimentgestein aus Kalk. Genauer ist es ein Agglomerat aus urzeitlichen Mikrofossilien, beispielsweise Coccosssphären oder Calcisphären, die sedimentiert und durch geologische Kräfte zu einem weichen Gestein zusammengepresst wurden, wobei die Mikrofossilien mehr oder minder intakt geblieben sind. Da der Zusammenhalt der Mikrofossilien(bruchstücke) untereinander kleiner ist als die Festigkeit der Mikrofossilien in sich, zerfällt die Kreide beim Zermahlen bevorzugt entlang der Grenzflächen zwischen benachbarten Mikrofossilien. Kreide bzw. Kreidepulver zeichnet sich dadurch nicht nur durch seine Feinkörnigkeit aus, sondern besitzt auch eine sehr hohe Homogenität der Partikelgrößen, d.h. eine Korngrößenverteilung mit vergleichsweise kleiner Abweichung vom Mittelwert.

Außer Kreide eignet sich auch Titandioxid als erfindungsgemäßer Zuschlagstoff, da es ebenfalls leicht zu einem sehr feinkörnigen Pulver zermahlen werden kann, weswegen es auch sehr häufig Verwendung als weißes Pigment in Farben findet. Hierbei werden üblicherweise Partikel mit Größen zwischen 200 und 300 Nanometer eingesetzt, welches sich für die hier vorgeschlagene Verwendung sehr gut eignet. Titandioxid wird schon heute Sanitäracryl in Gewichtsanteilen von etwa 2% Pigment zum Erreichen eines satten weißen Farbtons zugesetzt. Vorliegender Erfindung liegt die überraschende Erkenntnis zugrunde, dass eine vergleichsweise geringe Erhöhung des Titandioxid-Gehalts um zwischen 0,02 und 0,1 % im absoluten Gewichtsanteil, entsprechend einer relativen Erhöhung von 1 - 5% eine deutliche Verbesserung der durch Aufrauen, insbesondere Schleifen, erreichbaren Rutschhemmungswirkung zu Folge hat. Dies ist wohl darauf zurückzuführen, dass die zusätzlichen Titandioxid-Partikel der Oberfläche eine erhöhte Abriebfestigkeit verleihen.

Gemein ist allen diesen Stoffen, dass es sich um mineralische Pulver mit Korngrößen vorwiegend im Bereich von wenigen Mikrometern handelt. Es ist besonders bevorzugt, dass die mindestens 80% der Partikel/Körner des feinkörnigen Zuschlagstoffes einen mittleren Durchmesser von nicht mehr als 5 Mikrometern, und mindestens 40% einen mittleren Durchmesser von nicht mehr als 1 Mikrometer besitzen.

Die Oberflächenrauhigkeit nach dem Aufrauen im letzten Schritt des erfindungsgemäßen Verfahrens sollte eine charakteristische Länge von zwischen 3 bis 10 Mikrometern, bevorzugt zwischen 4 und 6 Mikrometern haben. Die charakteristische Länge ist hierbei gegeben durch die mittlere Breite und die mittlere Höhe der Oberflächenstrukturen nach dem Aufrauen, welche in etwa gleich groß sein sollten, so dass also die "Berge" ein Aspektverhältnis von ungefähr eins aufweisen. Die mittlere Höhe ist hier die über die Fläche gemittelte Differenz zwischen benachbarten Hoch- und Tiefpunkten der Oberfläche. Die mittlere Breite soll in ähnlicher Weise als der flächengemittelte Abstand zwischen benachbarten Hoch- oder Tiefpunkten verstanden sein.

Wie das Aufrauen der Oberfläche konkret erreicht wird, ist im Rahmen vorliegender Erfindung grundsätzlich beliebig. Bevorzugt geschieht dies jedoch durch Schleifen der Oberfläche mit einem Schleifmittel, besonders bevorzugt unter Verwendung eines Schleifgerätes. Dies ist schnell, simpel und führt zu reproduzierbaren Schleifbildern, was für die Optik der Wannen wichtig ist. Das Schleifmittel kann beispielsweise Schleifpapier sein. Eine Schleifscheibe oder ein Schleifstein ist jedoch ebenfalls verwendbar, solange sie der Grobform der Wannenoberfläche, d.h. der Biegung auf der Zenti- und Dezimeterskala ausreichend genau angepasst bzw. anpassbar sind.

Besonders bevorzugt wird als Schleifgerät ein Schwingschleifer verwendet. Ein für das Schleifbild und damit die erreichte Oberflächenrauhigkeit ist ebenfalls wichtiger Parameter ist der eingestellte Hub. Dieser sollte für das erfindungsgemäße Verfahren zwischen 1,5 und 4 mm, bevorzugt zwischen 2 und 3 mm eingestellt werden.

Die Körnung des Schleifmittels, insbesondere Schleifpapiers, muss grob genug sein, um eine spürbare Aufrauhung und damit Rutschhemmung zu bewirken, sollte andererseits aber fein genug bleiben um weiterhin eine gute Reinigbarkeit und fein-matte Optik zu gewährleisten. Diesen Anforderungen wird erfahrungsgemäß durch eine Körnung im Bereich von 300 bis 350 Mesh, bevorzugt etwa 320 Mesh am besten Rechnung getragen.

Besonders bevorzugt erfolgt das Schleifen in mindestens zwei Durchgängen, wobei zunächst ein größerer Hub von etwa 3 mm eingestellt wird, und dieser dann in den folgenden Durchgängen bis auf 2 mm reduziert wird. Das Schleifmittel kann beim ersten Durchgang zwecks Beschleunigung des Verfahrens gröber, im Bereich zwischen 200-300 Mesh, gewählt sein. Für den finalen Schleifgang wird jedoch bevorzugt die oben empfohlene Körnung von 320 Mesh verwendet.

Ein durchgängig besonders sauberes Schleifbild und daher homogene Rutschhemmung kann dann erhalten werden, wenn die Oberfläche der Dusch- oder Badewanne ohne Knicke oder Kanten, das heißt kontinuierlich möglichst sanft geschwungen gestaltet ist.

Zwischen den Schritten Formen durch Tiefziehen und Aufrauen der Oberfläche des erfindungsgemäßen Verfahrens können auch weitere Arbeitsschritte an er Dusch- oder Badewanne durchgeführt werden. Dies können beispielsweise sein Anbringen einer unterseitigen Verstärkung aus Glasfasern oder Kunstharz, Be- bzw. Zuschneiden der Wannenränder oder auch das Einbringen von Bohrungen, etwa für den Abfluss oder für Sprudel- und/oder Massagedüsen.

Die erfindungsgemäße rutschhemmende Dusch- oder Badewanne weist erfindungsgemäß eine Oberflächenrauigkeit mit charakteristischer Länge von zwischen 3-10 Mikrometern, bevorzugt 4 - 6 Mikrometern auf, welche erreicht wird durch Schleifen der Oberfläche mit einem Schleifmittel, welches eine Körnung zwischen 300 bis 350, besonders bevorzugt etwa 320 Mesh besitzt.

Das erfindungsgemäße Verfahren zur Regeneration der rutschhemmenden Oberfläche einer Bade- oder Duschwanne aus Sanitäracryl, welches einen feinkörnigen Zuschlagstoff enthält, geschieht bevorzugt durch Schleifen mit einem Schleifmittel, welches eine Körnung von zwischen 300 und 350 Mesh, bevorzugt etwa 320 Mesh besitzt. Das Regeneration-Schleifen kann hierbei maschinell ausgeführt werden, etwa mit einem Schwing- oder Exzenterschleifgerät. Bevorzugt wird es jedoch einfach von Hand durchgeführt, besonders bevorzugt unter Verwendung eines Schleifschwammes mit der angegebenen idealen Körnung. Dies ist simpel und kostengünstig und aufgrund der noch vorhandenen verbliebenen Rauigkeit nicht zeitaufwendiger als der maschinelle Schleifvorgang bei der Herstellung der Wanne.

**Patentansprüche**

1. Verfahren zur Herstellung einer Dusch- oder Badewanne aus Sanitäracryl mit rutschhemmender Oberfläche, wobei die rutschhemmende Oberfläche durch Aufrauen geschaffen wird, und wobei

    i. ein flächiger Rohling aus Sanitäracryl bereitgestellt wird,
    ii. der Rohling durch Erwärmen und Tiefziehen zu einer Wanne einer gewünschten Form geformt wird,

wobei in einem weiteren Schritt nach dem Ausformen der erkalteten Wanne das Aufrauen der Oberfläche durch Schleifen erfolgt, **dadurch gekennzeichnet, dass**

    - das Material des Rohlings zu einem gewissen Gewichtsanteil einen feinkörnigen Zuschlagstoff enthält, und
    - das Schleifen mit einem Schwing- oder Exzenterschleifer mit einem Hub zwischen 1,5 u. 4 mm, bevorzugt zwischen 2 und 3 mm, und unter Verwendung eines Schleifmittels mit einer Körnung zwischen 300 und 350 Mesh, bevorzugt etwa 320 Mesh, erfolgt.

2. Verfahren nach Anspruch 1, **dadurch gekennzeichnet, dass** der Gewichtsanteil des Zuschlagstoffes zwischen 0,01 bis 0,5%, bevorzugt zwischen 0,02 bis 0,2% liegt.

3. Verfahren nach Anspruch 1 oder 2, **dadurch gekennzeichnet, dass** der feinkörnige Zuschlagstoff:

    - mineralisch ist, und/oder
    - Calciumcarbonat, insbesondere Kreidepulver, ist, und/oder
    - Magnesiumcarbonat ist, und/oder
    - pyrogene Kieselsäure ist, und/oder
    - Titandioxid ist, und/oder
    - eine Korngrößenverteilung aufweist, bei der mindestens etwa 80% der Partikel einen mittleren Durchmesser unter 5 $\mu$m und mindestens etwa 40% der Partikel einen mittleren Durchmesser unter 1 $\mu$m besitzen.

4. Verfahren nach einem der vorhergehenden Ansprüche, **dadurch gekennzeichnet, dass** die Rauigkeit eine charakteristische Länge von 3 - 10 $\mu$m, insbesondere von 4 - 6 $\mu$m aufweist.

5. Verfahren nach einem der vorhergehenden Ansprüche, **dadurch gekennzeichnet, dass** das Schleifen in zwei Durchgängen erfolgt, wobei in einem ersten Durchgang ein größerer Hub als im anschließenden zweiten Durchgang verwendet wird.

6. Verfahren nach einem der Ansprüche 1-5, **dadurch gekennzeichnet, dass** die Oberfläche der Wanne knickfrei gestaltet wird.

7. Verfahren nach einem der Ansprüche 1-6, **dadurch gekennzeichnet, dass** zwischen dem Formen der Wanne und dem Aufrauen weitere Bearbeitungsschritte, insbesondere Anbringen einer unterseitigen Verstärkung aus Glasfasern und/oder Kunstharz, Beschneiden der Wannenränder und/ oder Einbringen von Bohrungen, beispielsweise für den Ablauf, ausgeführt werden.

8. Dusch- oder Badewanne aus Sanitäracryl mit aufgerauter rutschhemmender Oberfläche,

   **dadurch gekennzeichnet, dass**
   das Sanitäracryl einen feinkörnigen Zuschlagstoff enthält, und
   die Wanne durch Schleifen mit einem Schwing- oder Exzenterschleifer mit einem Hub zwischen 1,5 u. 4 mm, bevorzugt zwischen 2 und 3 mm, und unter Verwendung eines Schleifmittels mit einer Körnung zwischen 300 und 350 Mesh, bevorzugt etwa 320 Mesh, eine Oberflächenrauigkeit mit einer charakteristischen Länge von 3-10 $\mu$m, insbesondere 4 - 6 $\mu$m aufweist.

9. Verfahren zur Regeneration der rutschhemmenden Oberfläche einer Dusch- oder Badewanne gemäß Anspruch 8,

   **dadurch gekennzeichnet, dass**
   die Oberfläche mit einem Schleifmittel aufgeraut wird, welches eine Körnung von 300 bis 350 Mesh, insbesondere etwa 320 Mesh, aufweist.

10. Verfahren nach Anspruch 9, **dadurch gekennzeichnet dass** die Oberfläche mit einer Rauigkeit mit einer charakteristischen Länge von 3 - 10 $\mu$m, insbesondere 4 - 6 $\mu$m, versehen wird.

11. Verfahren nach einem der Ansprüche 9 oder 10, **dadurch gekennzeichnet, dass** das Schleifen von Hand, insbesondere mit einem Schleifschwamm, erfolgt.


**Claims**

1. Method for manufacturing a shower tray of bathtub made of sanitary acrylic with a non-slip surface, whereby the non-slip surface is created by roughening, and wherein

   i. a flat blank of sanitary acrylic is provided,
   ii. the blank is formed into a tray or tub of a desired shape by heating and deep-drawing, wherein, in a further step after the forming of the cooled tub or tray, the roughening of the surface takes place by means of sanding,
   **characterized in that**

   - the material of the blank comprises a certain weight fraction of a fine-grained aggregate, and
   - the sanding is carried out by means of an orbital sander or a random orbital sander with a vertical displacement of between zwischen 1,5 and 4 mm, preferably between 2 and 3 mm, and using an abrasive with a grit size between 300 und 350 Mesh, preferably about 320 Mesh.

2. Method according to claim 1, **characterized in that** the weight fraction of the aggregate lies between 0,01 and 0,5%, preferably between 0,02 and 0,2%.

3. Method according to claim 1 or 2, **characterized in that** the fine-grained aggregate:

   - is mineral, and/or
   - is calcium carbonate, in particular chalk powder, and/or
   - is magnesium carbonate, and/or
   - is pyrogenic silica, and/or
   - is titanium dioxide, and/or
   - has a grit size distribution, wherein at least about 80% of the particles have a mean diameter of less than 5 $\mu$m and at least about 40% of the particles have a mean diameter of less than 1 $\mu$m.

4. Method according to one of the preceeding claims, **characterized in that** the surface roughness has a characteristic length of 3 - 10 $\mu$m, in particular of 4 - 6 $\mu$m.

5. Method according to one of the preceeding claims, **characterized in that** the sanding is carried out in two passages, wherein in a first passage a larger vertical displacement is used than in a subsequent second passage.

6. Method according to one of the claims 1 - 5, **characterized in that** the surface of the tray or tub is fashioned kink free.

7. Method according to one of the claims 1 - 6, **characterized in that** between the forming of the tray or tub and the roughening further manufacturing steps are carried out, in particular attachment of a reinforcement made of glass fibres and/or resin to an underside, trimming of the rim of the tray or tub and/or introducing bores, for instance for the drain.

8. Shower tray or bath tub made of sanitary acrylic with a roughened non-slip surface,

   **characterized in that**
   the sanitary acrylic comprises a fine-grained aggregate, and the tray or tub, through sanding with an orbital sander or random orbital sander with a vertical displacement of between 1,5 and 4 mm, preferably between 2 and 3 mm and using an abrasive with a grit size between 300 and 350 Mesh, preferably about 320 Mesh, has a surface roughness with a characteritic length of 3 - 10 $\mu$m, in particular 4 - 6 $\mu$m.

**9.** Method for the regeneration of a non-slip surface of a shower tray or bathtub according to claim 8,

**characterized in that**
the surface is roughened with an abrasive that has a grit size of 300 to 350 Mesh, in particular about 320 Mesh.

**10.** Method according to claim 9, **characterized in that** the surface is given a roughness with a characteristic length of 3 - 10 μm, in particular 4 - 6 μm.

**11.** Method according to one of the claims 9 or 10, **characterized in that** the sanding is carried out by hand, in particular using a sanding sponge.

**Revendications**

**1.** Procédé pour la production d'une douche ou d'une baignoire en acrylique sanitaire avec une surface antidérapante, la surface antidérapante étant créée par rugosité, et dans lequel

i. un flan plat en acrylique sanitaire est fourni,
ii. le flan est façonnée en un bac ou une cuve d'une forme souhaitée par chauffage et emboutissage profond,
étant dans une étape supplémentaire après le refroidissement du bac ou de la cuve, la surface est rendue rugueuse par ponçage,
**caractérisé en ce que**

- le matériau du flan contient un granulat à grains fins jusqu'à un certain pourcentage en poids, et
- Le ponçage est réalisé avec une ponceuse orbitale ou excentrique avec une course comprise entre 1,5 et 4 mm, de préférence entre 2 et 3 mm, et à l'aide d'un abrasif avec une granulométrie comprise entre 300 et 350 mesh, de préférence autour de 320 mesh..

**2.** Procédé selon la revendication 1, **caractérisé en ce que** la fraction pondérale du granulat est comprise entre 0,01 et 0,5%, de préférence entre 0,02 et 0,2%

**3.** Procédé selon la revendication 1 ou 2, **caractérisé en ce que** le granulat fin:

- est minéral, et/ou
- est du carbonate de calcium, notamment de la poudre de craie, et/ou
- est du carbonate de magnésium, et/ou
- est de la silice pyrogénée, et/ou
- est du dioxyde de titane, et/ou
- a une distribution granulométrique, dans laquelle au moins environ 80 % des particules ont un diamètre moyen inférieur à 5 μm et au moins environ 40 % des particules ont un diamètre moyen inférieur à 1 μm.

**4.** Procédé selon l'une des revendications précédentes, **caractérisé en ce que** la rugosité a une longueur caractéristique de 3 à 10 μm, en particulier de 4 à 6 μm.

**5.** Procédé selon l'une des revendications précédentes, **carac-térisé en ce que** le ponçage est effectué en deux passages, dans lequel effectué dans un premier passage une course plus grand est utilisé que dans un deuxième passage suivant.

**6.** Procédé selon l'une des revendications 1 à 5, **caractérisé en ce que** la surface du bac ou de la cuve est façonnée sans pliure.

**7.** Procédé selon l'une des revendications 1 à 6, **caractérisé en ce qu'**entre le formage de la cuve ou du bac et le ponçage d'autres étapes de fabrication sont réalisées, notamment la fixation d'un renfort en fibres de verre et/ou en résine au dessous de la cuve ou du bac, rognage du rebord du bac ou de la cuve et/ou introduction de perçages, par exemple pour le drain.

**8.** Bac à douche ou baignoire en acrylique sanitaire avec une surface rugueuse et antidérapante,

**caractérisé en ce que**
l'acrylique sanitaire contient un agrégat à grain fin, et
la cuve par ponçage avec une ponceuse orbitale ou excentrique avec une course comprise entre 1,5 et 4 mm, de préférence entre 2 et 3 mm, et en utilisant un abrasif avec une granulométrie comprise entre 300 et 350 mesh, de préférence environ 320 Mesh, a une rugosité de surface avec une longueur caractéristique de 3 à 10 μm, en particulier de 4 à 6 μm.

**9.** Procédé de régénération de la surface antidérapante d'un bac á douche ou d'une baignoire selon la revendication 8, **caractérisé en ce que** la surface est rendue rugueuse avec un abrasif qui a une granulométrie de 300 à 350 mesh, en particulier d'environ 320 mesh.

**10.** Procédé selon la revendication 9, **caractérisé en ce que la** surface est pourvue d'une rugosité avec une longueur caractéristique de 3 à 10 μm, en particulier 4 à 6 μm.

**11.** Procédé selon l'une des revendications 9 ou 10, **caractérisé en ce que** le ponçage est effectué à la main, notamment avec une éponge abrasive.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4309019 A1